# EUROPEAN PATENT APPLICATION

(11) **EP 4 524 861 A1**
(43) Date of publication of application: **19.03.2025**
(21) Application number: 24199958.0
(22) Date of filing: 12.09.2024
(51) Int. Cl.: G06Q 20/40, G06Q 40/03, G06N 20/00

(54) **METHOD AND APPARATUS FOR FACILITATING PROVISION OF EXPOSURE MANAGEMENT BASED ON STREAMING DATA FEEDS VIA MACHINE LEARNING AND LOW LATENCY MODELING**

(30) Priority: 18.09.2023 US 202318369424
(71) Applicant: Affirm, Inc., San Francisco, CA 94108 (US)
(72) Inventor: BRIDEN, Ross, San Francisco, 94108 (US); ARCEO, Francisco Javier, San Francisco, 94108 (US); HUANG, Aiqing, San Francisco, 94108 (US); BACKMAN, Johan, San Francisco, 94108 (US); XU, Jiarui, San Francisco, 94108 (US); DUGGAN, Laurence, San Francisco, 94108 (US)
(74) Representative: Piotrowicz, Pawel Jan Andrzej

(57) **Abstract**

A method for expediting speed and enhancing accuracy of debit limit determinations based on streaming data feeds may include monitoring event data for an event trigger that, when received, directs a call to determine a debit limit for a customer, receiving streaming data from a plurality of arbitrary sources, the streaming data including features evaluated by a business logic module to determine the debit limit for the customer, employing a machine learning module to extract the features from the streaming data and supply the extracted features to the business logic module, and determining the debit limit based on the extracted features via the business logic module responsive to the event trigger.

## Description

### TECHNICAL FIELD

Example embodiments generally relate to financial industry technologies and, in particular, relate to apparatuses, systems, and methods for facilitating commerce by enabling low latency, real-time risk modeling.

### BACKGROUND

The financial industry is comprised of many thousands of customers, vendors, lenders, borrowers, and other role players that all interact in various ways to enable customers to ultimately have access to goods and services provided by vendors. Credit and financial transactions have long been a way that individuals have managed point of sale transactions to ensure seamless transfer of funds from customers, or on their behalf, to vendors for relatively routine or small transactions. Meanwhile, obtaining a loan from a bank has long been the most common way of obtaining financing for non-routine or larger transactions. More recently, installment loan financing has become a popular option.

Credit cards and certain other lending vehicles may be useful tools for many customers. However, some customers can find themselves over extended either quickly or over a period of time based on the existing tools. This phenomenon has repeated itself over generations, and for millions of customers. Thus, there is now a deep desire on the part of many to create flexible and fair means of supporting customer purchasing activities that is both honest and transparent, and that also improves the lives of customers.

Installment loans, or buy now, pay later financing, have become a popular tool in relation to addressing the issues noted above. However, even this popular tool typically gets employed at the time a purchase is being undertaken. For example, the customer may select a product of interest and proceed to checkout (virtually or at a brick and mortar store) to purchase the product. The payment means selected to pay the merchant for the product may be a physical or virtual card that is linked to accounts that enable an installment loan to be granted to the customer, and funds may be transferred to the merchant on behalf of the customer for purchase of the product, if the customer is approved for the installment loan.

In other cases, such as when a value card (e.g., a credit or debit card) is presented by a customer for payment at checkout, the decision making progress regarding whether to support the transaction must be made very quickly, and the algorithms and policies that are involved may include account balances or checks that cannot necessarily be instantaneously done, or appreciated to be fully accurate since other transactions, or even a series of transactions, may have been made since the latest information available for review can be obtained. These situations may create risk for the issuer of the value card, and may also result in undesirable negative impacts on the customer. Additionally, users may want a value card that is functionally dynamic supporting pay now transactions or installment loan transactions, which the user has the ability to dictate via an app or otherwise.

One example of a situation in which a user (i.e., a customer and potential borrower) may suffer in relation to delays that are inherent in the system may arise in the context of transactions involving enabling Automated Clearing House (ACH) transfers or payments. ACH payments are a form of electronic bank transaction made using a network (i.e., the ACH network) that is formed from a system of computers that communicate with each other to make and receive payments. For each transaction there is one computer at the sending end to send a request for payment, and another computer at the receiving end to accept the request. Whereas many customers may imagine that a financial transaction somehow transfers money directly from their accounts into the corresponding accounts of merchants, that is typically not the case. Instead, the card issuer or related entity (as described in more detail below) may transfer money from an account on behalf of the customer to the vendor to support the transaction, and then the card issuer may request an ACH transfer from the customer account to cover the transaction.

Although fairly standard as a method of transferring money, the movement of the money using ACH is relatively slow. In this regard, a lender or bank or related finance company may submit a file containing all of the transfers that are to be performed to initiate the process, but there is no confirmation received through the system to indicate whether or not each transaction has gone through successfully. The only communication received from the system is generally received in the event of a failure for either insufficient funds or an account being closed, for example. Moreover, even notifications of failed ACH transfers may take 1 to 2 business days to be received.

The fact that there is no confirmation for successful transfers can create a problem for a card user (and consequently for a card issuer) since it is not clear what the current status of the user (or customer) account(s) may be at the time a transaction needs to be made. The card issuer must therefore balance the risk of floating money to a customer against the uncertainty of the accuracy of account information. Should the card issuer decide to take the risk in a situation where the customer has had intervening transactions taking money from his/her account that causes an ACH transfer to fail, both the customer and the card issuer may receive financial penalties in the form of failed transfer fees.

In at least some cases, these fees may be avoidable, and such avoidance is highly desirable for the customer and the card issuer. The persistence of such a desirable problem to eliminate exists due to the fact that there are presently no practically suitable technical means to be sure that perfect information on account status is being reviewed when decisions are being made. While that level of perfection is not likely to be achieved in the short term, and until such a solution can be provided, perhaps other technical means may be instantiated to alleviate the problem noted above. Example embodiments aim precisely at doing this.

As can likely be appreciated from the description above, the potential for receiving failed ACH transfer notification can be very frustrating and costly for users. Moreover, causing user frustration can dissuade users from establishing loyalty to any particular brand or service. Given that the nature of ACH transfers is outside the control of the card issuer (or lender), the card issuer or lender must consider other creative options for improving the situation described above that are fully within the control of the card issuer or lender. Accordingly, some example embodiments may enable the provision of technical means by which to provide a rapid increase in the speed and accuracy associated with account status determinations.

### BRIEF SUMMARY OF SOME EXAMPLES

In an example embodiment, a method for expediting speed and enhancing accuracy of debit limit determinations based on streaming data feeds may be provided. The method may include monitoring event data for an event trigger that, when received, directs a call to determine a debit limit for a customer, receiving streaming data from a plurality of arbitrary sources, the streaming data including features evaluated by a business logic module to determine the debit limit for the customer, employing a machine learning module to extract the features from the streaming data and supply the extracted features to the business logic module, and determining the debit limit based on the extracted features via the business logic module responsive to the event trigger.

In another example embodiment, an apparatus for expediting speed and enhancing accuracy of debit limit determinations based on streaming data feeds may be provided. The apparatus may include processing circuitry configured for monitoring event data for an event trigger that, when received, directs a call to determine a debit limit for a customer, receiving streaming data from a plurality of arbitrary sources, the streaming data including features evaluated by a business logic module to determine the debit limit for the customer, employing a machine learning module to extract the features from the streaming data and supply the extracted features to the business logic module, and determining the debit limit based on the extracted features via the business logic module responsive to the event trigger.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:
FIG. 1 illustrates a functional block diagram of a system for providing a payments platform according to an example embodiment;
FIG. 2 illustrates a functional block diagram of an apparatus for defining a payments platform according to an example embodiment;
FIG. 3 illustrates a block diagram showing control flow for determining whether to accept or decline a transaction in connection with a limit determination made in accordance with an example embodiment;
FIG. 4 illustrates a block diagram showing system interactions in accordance with an example embodiment; and
FIG. 5 illustrates a block diagram of a method for expediting speed and enhancing accuracy of debit limit determinations based on streaming data feeds in accordance with an example embodiment.

### DETAILED DESCRIPTION

Some example embodiments now will be described more fully hereinafter with reference to the accompanying drawings, in which some, but not all example embodiments are shown. Indeed, the examples described and pictured herein should not be construed as being limiting as to the scope, applicability or configuration of the present disclosure. Rather, these example embodiments are provided so that this disclosure will satisfy applicable legal requirements. Like reference numerals refer to like elements throughout. Furthermore, as used herein, the term "or" is to be interpreted as a logical operator that results in true whenever one or more of its operands are true. As used herein, operable coupling should be understood to relate to direct or indirect connection that, in either case, enables functional interconnection of components that are operably coupled to each other. Additionally, when the term "data" is used, it should be appreciated that the data may in some cases include simply data or a particular type of data generated based on operation of algorithms and computational services, or, in some cases, the data may actually provide computations, results, algorithms and/or the like that are provided as services.

As used in herein, the term "module" is intended to include a computer-related entity, such as but not limited to hardware, firmware, or a combination of hardware and software (i.e., hardware being configured in a particular way by software being executed thereon). For example, a module may be, but is not limited to being, a process running on a processor, a processor (or processors), an object, an executable, a thread of execution, and/or a computer. By way of example, both an application running on a computing device and/or the computing device can be a module. One or more modules can reside within a process and/or thread of execution and a module may be localized on one computer and/or distributed between two or more computers. In addition, these components can execute from various computer readable media having various data structures stored thereon. The modules may communicate by way of local and/or remote processes such as in accordance with a signal having one or more data packets, such as data from one module interacting with another module in a local system, distributed system, and/or across a network such as the Internet with other systems by way of the signal. Each respective module may perform one or more functions that will be described in greater detail herein. However, it should be appreciated that although this example is described in terms of separate modules corresponding to various functions performed, some examples may not necessarily utilize modular architectures for employment of the respective different functions. Thus, for example, code may be shared between different modules, or the processing circuitry itself may be configured to perform all of the functions described as being associated with the modules described herein. Furthermore, in the context of this disclosure, the term "module" should not be understood as a nonce word to identify any generic means for performing functionalities of the respective modules. Instead, the term "module" should be understood to be a modular component that is specifically configured in, or can be operably coupled to, the processing circuitry to modify the behavior and/or capability of the processing circuitry based on the hardware and/or software that is added to or otherwise operably coupled to the processing circuitry to configure the processing circuitry accordingly.

Some example embodiments described herein provide for a payments platform that can be instantiated at an apparatus comprising configurable processing circuitry, and which may process various pay now, or debit, or other financial transactions. The processing circuitry may be configured to execute various processing functions on financial data using the techniques described herein. The payments platform may, for example, be configured to provide a way to balance the desire for accurate account status determinations with the need for speed in making such determinations. More particularly, the payments platform may use technical tools to define specific triggers to tell the platform when to conduct transaction limit determinations based on vast amounts of information that provide queues that are useful indicators regarding the likelihood of receiving an ACH return of an ACH transfer (which may sometimes include an insufficient funds (NSF) return of an ACH transfer) associated with the potential transaction (or future transactions). Thus, for example, the platform may use machine learning tools to facilitate the fast processing of massive amounts of information that could not otherwise be processed in any reasonable timeframe for the context involved. The information processed may be employed along with real time streaming data of many useful types to provide inputs to the logic that is normally used to determine transaction limits. This gives an improved likelihood of a more accurate picture in real time, but suffers the drawback of potentially causing rapid cycling of the transaction limit itself. Accordingly, the platform further defines the times when updates to the actual transaction limit that is to be used will be made, which are the triggers for transaction limit determination (or modification). By having a highly responsive or fast tool for making more accurate real time assessments of transaction limits that should be applicable at any given time, but by further moderating the potential volatility that may result from the operation of such a fast and hyper-accurate tool, example embodiments employ technical means to make dramatic improvements in the speed of processing, while making efficient use of computer resources and also reducing the risk to the lender.

In this regard, the combination of intelligently deciding when new debit limits should be computed with the ability to handle high velocity data of many different types that can be relevant to making accurate determinations regarding those debit limits creates a fast, efficient, and accurate debit transaction processing platform that benefits all parties materially. In this regard, if a user has a transaction declined based on inaccurate data, brand loyalty may suffer, customer satisfaction may be reduced, and even merchant satisfaction with any association with the card issuer (or transaction facilitator) may be eroded. Whereas, one alternative would always be to simply accept more risk (and potentially more ACH return fees on the part of the issuer, overdraft or insufficient funds (NSF) fees on the part of the customer) by the card issuer/transaction facilitator, further strategic initiative and technical tools may yet improve the situation even more. Example embodiments therefore use technical means embedded into information exchange, to further enable fast and accurate processing that improves the entire process massively (e.g., by enhancing both speed and accuracy (through the ability to process massive amounts of relevant data) along with providing more efficient resource usage). This technical assistance to customers, which saves both them and the transaction facilitator money and reputation, may be game changing in terms of customer satisfaction while also driving increased sales volume, without a corresponding appreciable increase in risk. The user can therefore experience the benefits of continued positive (e.g., relationship enhancing) behaviors, and the card issuer/transaction facilitator can build a loyal customer base of satisfied card users by using technical means to leverage benefit to the customer without increasing risk and instead by using highly capable technical tools.

Example embodiments therefore do not relate to the legal responsibilities associated with establishing a loan or a lending relationship. Moreover, example embodiments do not merely relate to the calculation of risk used to determine whether to grant a loan to a vendor. Instead, example embodiments relate to a technical means by which to enhance the types of data that can be considered with respect to the calculation of risk and the determination of debit limits by virtue of the fact that machine learning tools capable of processing massive amounts of data quickly are employed. This creates fast tools that efficiently enable the facilitator to determine whether to approve a debit transaction.

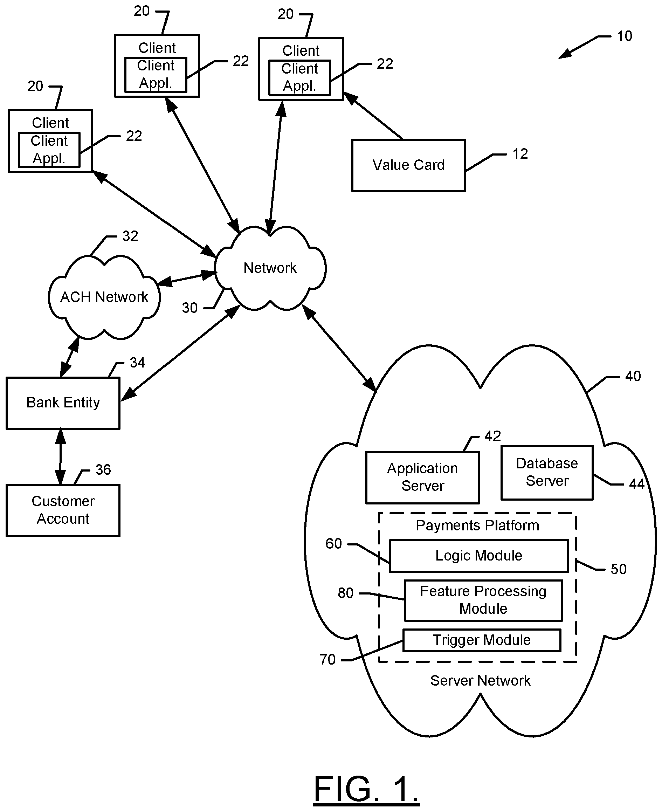

An example embodiment of the invention will now be described in reference to FIG. 1, which illustrates an example system in which an embodiment of the present invention may be employed. As shown in FIG. 1, a transaction management system 10 according to an example embodiment may include one or more client devices (e.g., clients 20). Notably, although FIG. 1 illustrates three clients 20, it should be appreciated that a single client or many more clients 20 may be included in some embodiments and thus, the three clients 20 of FIG. 1 are simply used to illustrate a potential for a multiplicity of clients 20 and the number of clients 20 is in no way limiting to other example embodiments. In this regard, example embodiments are scalable to inclusion of any number of clients 20 being tied into the system 10. Furthermore, in some cases, some embodiments may be practiced on a single client without any connection to the system 10.

The clients 20 may, in some cases, each be associated with a single computer or computing device that is capable of executing software programmed to implement example embodiments. Thus, in some embodiments, one or more of the clients 20 may be associated with an organization (e.g., a merchant company) and may be located in different business units, branch offices, or other locations. In other cases, the clients 20 may be associated with individual users (i.e., customers) that may wish to interact with other clients 20 and/or a financial institution or entity. In general, the clients 20 may be terminals or platform entities that are capable of executing example embodiments, and there could be as few as one, or a host of such terminals or entities.

In one example use case, the client 20 may be a merchant terminal used to inform a payments platform 50 of a transaction initiated by a customer with the merchant via a value card 12 (e.g., a credit or debit card) issued by or serviced by the borrower or facilitator. In another example use case, the client 20 may be a cell phone or computer of the customer attempting to initiate a transaction online to purchase a good or service provided by the merchant, and the client application 22 may be a website of the merchant via which the customer provides the value card 12 or other payment method details to apply for a loan or credit from the borrower or facilitator via the payments platform. Example embodiments may, in some cases, specifically apply to financial transactions.

Thus, for example, in some cases each one of the clients 20 may include one or more instances of a communication device such as, for example, a computing device (e.g., a computer, a server, a network access terminal, a personal digital assistant (PDA), radio equipment, cellular phone, smart phone, or the like) capable of communication with a network 30. As such, for example, each one of the clients 20 may include (or otherwise have access to) memory for storing instructions or applications for the performance of various functions and a corresponding processor for executing stored instructions or applications. Each one of the clients 20 may also include software and/or corresponding hardware for enabling the performance of the respective functions of the clients 20 as described below. In an example embodiment, the clients 20 may include or be capable of executing a client application 22 configured to operate in accordance with an example embodiment of the present invention. In this regard, for example, the client application 22 may include software for enabling a respective one of the clients 20 to communicate with the network 30 for requesting and/or receiving information and/or services via the network 30 as described herein. The information or services receivable at the client applications 22 may include deliverable components (e.g., downloadable software to configure the clients 20, or information for consumption/processing at the clients 20). As such, for example, the client application 22 may include corresponding executable instructions for configuring the client 20 to provide corresponding functionalities for sharing, processing and/or utilizing financial data as described in greater detail below.

The network 30 may be a data network, such as one or more instances of a local area network (LAN), a metropolitan area network (MAN), a wide area network (WAN) (e.g., the Internet), and/or the like, which may couple the clients 20 to devices such as processing elements (e.g., personal computers, server computers or the like) and/or databases. Communication between the network 30, the clients 20 and the devices or databases (e.g., servers) to which the clients 20 are coupled may be accomplished by either wireline or wireless communication mechanisms and corresponding communication protocols.

In an example embodiment, the network 30 may include or also be operably coupled to an automated clearing house (ACH) network 32 to which one or more instances of a bank entity 34 are also operably coupled. The bank entity 34 (or each of multiple such entities) may include various bank accounts associated with various customers. Such bank accounts may be referred to as customer accounts and customer account 36 in FIG. 1 is one such example of these customer accounts. As noted above, the customer may initiate a financial transaction to purchase a good or service of a merchant. For a debit purchase, the merchant (or customer) may inform the payments platform 50 (or transaction facilitation platform) of the desired transaction so that the customer can arrange the borrower/facilitator to transfer funds to the merchant on his/her behalf to obtain the good or service (e.g., from a for the benefit of (FBO) account of the borrower), and then arrange to transfer funds from the customer account 36 to borrower (facilitator). This transfer of funds from the customer account 36 may occur via the ACH network 32 by provision of an ACH file (or request) submitted by the facilitator to the bank entity 34. The bank entity 34 processes the ACH request and, if sufficient funds are available in the customer account 36, transfers money in the amount of the transaction from the customer account 36 to the facilitator.

In an example embodiment, devices to which the clients 20 may be coupled via the network 30 may include one or more application servers (e.g., application server 42), and/or a database server 44, which together may form respective elements of a server network 40. Although the application server 42 and the database server 44 are each referred to as "servers," this does not necessarily imply that they are embodied on separate servers or devices. As such, for example, a single server or device may include both entities and the database server 44 could merely be represented by a database or group of databases physically located on the same server or device as the application server 42. The application server 42 and the database server 44 may include hardware and/or software for configuring the application server 42 and the database server 44, respectively, to perform various functions. As such, for example, the application server 42 may include processing logic and memory enabling the application server 42 to access and/or execute stored computer readable instructions for performing various functions. In an example embodiment, one function that may be provided by the application server 42 may be the provision of access to information and/or services related to payments platform 50, and more particularly relating to facilitating financial computations and calculations related to decisions associated with lending or extensions of credit (e.g., to cover financial transactions). For example, the application server 42 may be configured to provide (via the payments platform 50) execution of instructions, and storage of information descriptive of events or activities, associated with the payments platform 50 and the execution of a financial computations, calculations and modeling on behalf of a user of the system 10 located at one of the clients 20, or interacting with a user located at one of the clients 20, in real time.

In some cases, the financial transaction may include obtaining temporary funds transfer servicing associated with financial transactions, and the activities associated therewith may include the provision of a debit card or account number that can be used to facilitate financial transactions detailing information required by the facilitator (and operator of the payments platform 50) to determine whether borrowing power, funds, or other products can be provided to the customer based on information provided. In some cases, the information provided may be provided by the customer. However, in others, the bank entity 34 may be contacted to determine a status of the customer account 36 (e.g., an account balance therein) to determine how much can safely be advanced on behalf of the customer to support financial transactions.

In some embodiments, the payments platform 50 may be a technical device, component or module affiliated with the lender or an agent of the lender. Thus, the payments platform 50 may operate under control of the lender or agent of the lender to be a technical means by which to carry out activities under direction of the lender/agent or employees thereof. The lender may, in some cases, be a facilitator of a transaction between the user (or customer) and a merchant, where such facilitation includes the advancement of funds, provision of a loan or extension of credit to the customer (thereby making the customer a borrower, and the facilitator a lender). The facilitator may, in effect, act via the operation of the payments platform 50 via configuration of various decision making components thereof. Thus, in some cases, the payments platform 50 may effectively act as a facilitation agent.

In some embodiments, the clients 20 may access the payments platform 50 services, and more particularly contact the payments platform 50 online and utilize the services provided thereby. However, it should be appreciated that in other embodiments, an application (e.g., the client application 22) enabling the clients 20 to interact with the payments platform 50 (or components thereof) may be provided from the application server 42 (e.g., via download over the network 30) to one or more of the clients 20 to enable recipient clients 20 to instantiate an instance of the client application 22 for local operation such that the payments platform 50 may be a distributor of software enabling individual users to utilize the payments platform 50. Alternatively, another distributor of the software may provide the client 20 with the client application 22, and the payments platform 50 may communicate with the client 20 (via the client application 22) after such download.

In an example embodiment, the client application 22 may therefore include application programming interfaces (APIs) and other web interfaces to enable the client 20 to conduct operations as described herein via the payments platform 50. The client application 22 may include a series of control consoles or web pages including a landing page, onboarding services, activity feed, account settings (e.g., user profile information), transaction management services, payment management services and the like in cooperation with a service application that may be executed at the payments platform 50. Thus, for example, the client application 22 may enable the user or operator to articulate and submit queries, make credit extension/debit purchase requests, initiate and pay for transactions using funds associated with a credit extension/debit purchase request, and/or the like using the payments platform 50.

In an example embodiment, the application server 42 may include or have access to memory (e.g., internal memory or the database server 44) for storing instructions or applications for the performance of various functions and a corresponding processor for executing stored instructions or applications. For example, the memory may store an instance of the payments platform 50 configured to operate in accordance with an example embodiment of the present invention. In this regard, for example, the payments platform 50 may include software for enabling the application server 42 to communicate with the network 30 and/or the clients 20 for the provision and/or receipt of information associated with performing activities as described herein. Moreover, in some embodiments, the application server 42 may include or otherwise be in communication with an access terminal such as any one of the clients 20 (e.g., a computer including a user interface) via which individual operators or managers of the entity associated with the facilitation agent may interact with, configure or otherwise maintain the payments platform 50. Thus, it should be appreciated that the functions of the payments platform 50 can be conducted via client-server based interactions involving communications between clients 20 and the server network 40, or may be conducted locally at one of the clients 20 after an instance of the payments platform 50 is downloaded (e.g., via or as the client application 22) locally at the corresponding one of the clients 20.

As such, the environment of FIG. 1 illustrates an example in which provision of content and information associated with the financial industry may be accomplished by a particular entity (namely the payments platform 50 residing at the application server 42 or at one of the clients 20). Thus, the payments platform 50 may be configured to handle provision of content and information that are secured as appropriate for the individuals or organizations involved and credentials of individuals or organizations attempting to utilize the tools provided herein may be managed by digital rights management services or other authentication and security services or protocols that are outside the scope of this disclosure.

As noted above, the payments platform 50 may operate to enable the user associated with a given one of the clients 20 to setup an account (i.e., a user account) with an entity (e.g., a lender or facilitator) that operates the payments platform 50 and that, in some cases, may issue, or partner with an issuer of, the value card 12 to the customer. After account setup, the user may initiate transactions with various merchants via a physical or virtual card supported by the entity in association with the user account and the value card 12. The user account may, in some cases, be linked to the customer account 36 to facilitate access by the facilitator to the customer account 36 in association with conducting financial transactions. In this context, for example, the amount of money in the customer account 36 may be used by the facilitator to determine if a financial transaction initiated by the user is approved or denied by the facilitator. Moreover, in some cases, additional information such as historical cash flows, age of account, user repayment history, etc., may further inform the determinations regarding whether to approve or deny transactions. If the transaction is approved, the facilitator may then initiate an ACH pull in order to be reimbursed from the funds in the customer account 36.

In a typical case, the facilitator may be enabled to get a report from the bank entity 34 as to the status of the customer account 36 periodically. For example, upon request or at various intervals, the facilitator may receive transaction information such as an account balance or other status information associated with the customer account 36. Obviously, the facilitator would not want to cover a transaction larger than the current account balance in the customer account 36. However, there remains the problem that the facilitator cannot know in real time what other transactions or money transfers are planned or already being processed that may add money into or take money from the customer account 36. Thus, the facilitator must appreciate that the account balance fluctuates.

In some cases, to account for this natural and normal fluctuation of the account balance of the customer account 36, the facilitator may place a predetermined transaction limit as a function of the account balance at any given time to define a limit to the exposure risk the facilitator is willing to accept. The transaction limit, in the case of debit transactions, may be considered to be a debit limit. For example, the predetermined transaction limit (or debit limit) may be X% of the account balance at the time the account balance is checked (although any suitable value reflecting the risk tolerance of the facilitator may be chosen). The percentage chosen may be considered to be a bank balance factor, or simply a balance factor. The limit determination of the payments platform 50 may employ a secondary layer of risk mitigation by applying a fallback limit that is deployed (e.g., assigned as the users' debit limit) when the users' debit limit, as determined by the core machine learning module described herein, is greater than the users' current bank balance * bank factor %. In an example embodiment, the users' limit becomes the balance factor * bank balance. Further, the users' bank balance factor is a parameter that the model and business logic module described herein work together to determine. In other words, the system predicts an acceptable limit, but also determines and applies a dynamic bank balance factor to mitigate risk beneath the core limit itself.

The payments platform 50 may employ a logic module 60 to employ the business logic that is defined by the facilitator to reflect the risk tolerance the facilitator is willing to take by defining algorithms for making limit determinations (e.g., determining transaction limit s or debit limits) based on various input data. Although capable of being modified by the facilitator to reflect potential changes in risk tolerance, those changes are outside the scope of this disclosure. In general, the logic module 60 can simply be understood to be a technical tool for generating a transaction limit (i.e., making a limit determination) based on the information provided thereto, and the policies or rules that are implemented therein via computer logic or executable code. Example embodiments are therefore generally not concerned with the actual code or business logic that is used to drive this component. Instead, example embodiments focus on using technical tools to expand the types, characteristics and qualities of the data provided to this tool for decision making purposes, and to controlling how often (or at least when) this tool changes (or considers changing) debit limits. Within this context, the types, characteristics and qualities of the data received by the logic module 60 may generally be referred to as "features". Thus, while the logic module 60 does nothing unique with the features it receives, the features themselves may be unique, but certainly in any case are processed in a unique way before they are actually used by the logic module 60 to make its limit determinations.

To control when the logic module 60 performs limit determinations, example embodiments may employ a trigger module 70, and to control the processing of the features, a feature processing module 80 may be employed. The trigger module 70 may be necessary (or at least helpful) because without it, the limit determinations could undergo very rapid and even potentially large swings. In this regard, as will be discussed in greater detail below, the feature processing module 80 may allow event streams to be incorporated into the limit determinations made by the logic module 60 that include high velocity data that is massively voluminous. Thus, not only do the features output by the feature processing module 80 account for wide varieties of potentially relevant data (i.e., relevant to limit determinations), but they come at high speed and in very large volumes. The processing of such data alone would otherwise be daunting or impossible to accomplish in real time for limit determination purposes. Making such data available for consideration creates a much higher level of sensitivity (and therefore accuracy) for the logic module 60 with respect to its limit determinations. In this regard, the limit determinations account for far more relevant data sources, and also the potential for real time changes with respect to those sources. This may tend to create a sort of hypersensitivity of the logic module 60 to changes that was not previously possible, and which may actually be undesirable. For example, the arrival of certain features that indicate an increase in risk may be mitigated or offset, in some cases relatively soon thereafter, by conflicting or corrected feature data, or by a volume of data that is positive and therefore indicates reduced risk. More specifically, again by way of example, the existence of data of one type indicating account activity or customer activity that suggests spending occurred that will reduce the amount of a debit limit determined based on such information may shortly thereafter be followed by data of another type that indicates account replenishment and therefore would increase the amount of debit limit determined based on that information. Debit limits calculated in real time as each piece of information is received may be substantially different thereby potentially resulting in an ACT return likelihood (or NSF return likelihood) at one instant being high, and a short time later being relatively low. If the customer happens to get a transaction denied erroneously based on this timing issue, again the problems discussed above may occur. Conversely, if the customer has a transaction that should actually be denied approved erroneously due to the opposite set of circumstances playing out (i.e., positive indicators being received initially and before subsequent negative indicators are received), then the facilitator may suffer exposure and loss based on an ACH return occurring. Therefore the combination of increasing sensitivity of the tool (i.e., the logic module 60), while also managing the timing of when the tool is to be used creates an optimal balance for the mutual benefit of all parties concerned.

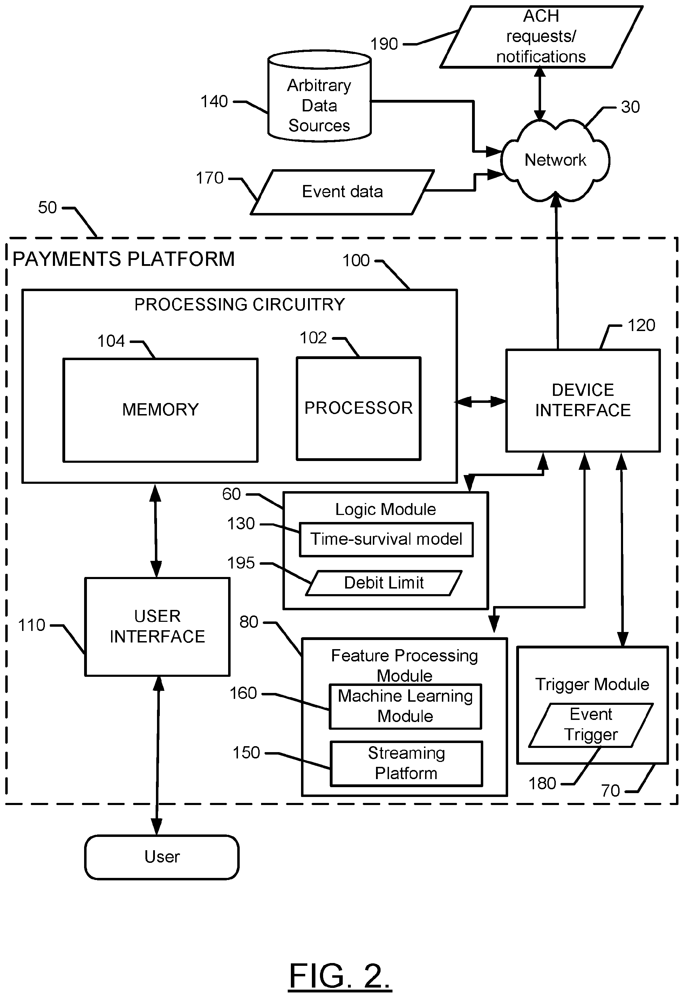

Each of these activities performed by these modules may have its own respective timing and calculations and communications that are facilitated by the payments platform 50 and various components of the payments platform 50 may be conducted in parallel. The components, which may include the logic module 60, the trigger module 70, and the feature processing module 80, may be functional modules that operate via API or function calls to respective segmented platforms or a monolith or other collection of rules, policies, instructions, or the like. The capabilities, some structural examples, and operational examples of the logic module 60, the trigger module 70, and the feature processing module 80 will be described in greater detail in reference to FIG. 2.

FIG. 2 shows certain elements of an apparatus for provision of the payments platform 50 or other processing circuitry according to an example embodiment. The apparatus of FIG. 2 may be employed, for example, as the payments platform 50 itself operating at, for example, a network device, server, proxy, or the like (e.g., the application server 42 of FIG. 1)). Alternatively, embodiments may be employed on a combination of devices (e.g., in distributed fashion on a device (e.g., a computer) or a variety of other devices/computers that are networked together). Accordingly, some embodiments of the present invention may be embodied wholly at a single device (e.g., the application server 42) or by devices in a client/server relationship (e.g., the application server 42 and one or more clients 20). Thus, although FIG. 2 illustrates the payments platform 50 as including the components shown, it should be appreciated that some of the components may be distributed and not centrally located in some cases. Furthermore, it should be noted that the devices or elements described below may not be mandatory and thus some may be omitted or replaced with others in certain embodiments.

Referring now to FIG. 2, an apparatus for provision of tools, services and/or the like for facilitating an exchange of information and services associated therewith in the financial industry is provided. The apparatus may be an embodiment of the payments platform 50 or a device hosting the payments platform 50. As such, configuration of the apparatus as described herein may transform the apparatus into the payments platform 50. In an example embodiment, the apparatus may include or otherwise be in communication with processing circuitry 100 that is configured to perform data processing, application execution and other processing and management services according to an example embodiment of the present invention. In one embodiment, the processing circuitry 100 may include a storage device (e.g., memory 104) and a processor 102 that may be in communication with or otherwise control a user interface 110 and a device interface 120. As such, the processing circuitry 100 may be embodied as a circuit chip (e.g., an integrated circuit chip) configured (e.g., with hardware, software or a combination of hardware and software) to perform operations described herein. However, in some embodiments, the processing circuitry 100 may be embodied as a portion of a server, computer, laptop, workstation or even one of various mobile computing devices. In situations where the processing circuitry 100 is embodied as a server or at a remotely located computing device, the user interface 110 may be disposed at another device (e.g., at a computer terminal) that may be in communication with the processing circuitry 100 via the device interface 120 and/or a network (e.g., network 30).

The user interface 110 may be in communication with the processing circuitry 100 to receive an indication of a user input at the user interface 110 and/or to provide an audible, visual, mechanical or other output to the user. As such, the user interface 110 may include, for example, a keyboard, a mouse, a joystick, a display, a touch screen, a microphone, a speaker, augmented/virtual reality device, or other input/output mechanisms. In embodiments where the apparatus is embodied at a server or other network entity, the user interface 110 may be limited or even eliminated in some cases. Alternatively, as indicated above, the user interface 110 may be remotely located.

The device interface 120 may include one or more interface mechanisms for enabling communication with other devices and/or networks. In some cases, the device interface 120 may be any means such as a device or circuitry embodied in either hardware, software, or a combination of hardware and software that is configured to receive and/or transmit data from/to a network (e.g., network 30) and/or any other device or module in communication with the processing circuitry 100. In this regard, the device interface 120 may include, for example, an antenna (or multiple antennas) and supporting hardware and/or software for enabling communications with a wireless communication network and/or a communication modem or other hardware/software for supporting communication via cable, digital subscriber line (DSL), universal serial bus (USB), Ethernet or other methods. In situations where the device interface 120 communicates with a network, the network 30 may be any of various examples of wireless or wired communication networks such as, for example, data networks like a Local Area Network (LAN), a Metropolitan Area Network (MAN), and/or a Wide Area Network (WAN), such as the Internet, as described above.

In an example embodiment, the memory 104 may include one or more non-transitory storage or memory devices such as, for example, volatile and/or non-volatile memory that may be either fixed or removable. The memory 104 may be configured to store information, data, applications, instructions or the like for enabling the apparatus to carry out various functions in accordance with example embodiments of the present invention. For example, the memory 104 could be configured to buffer input data for processing by the processor 102. Additionally or alternatively, the memory 104 could be configured to store instructions for execution by the processor 102. As yet another alternative, the memory 104 may include one of a plurality of databases (e.g., database server 44) that may store a variety of files, contents or data sets. Among the contents of the memory 104, applications (e.g., a service application configured to interface with the client application 22) may be stored for execution by the processor 102 in order to carry out the functionality associated with each respective application.

The processor 102 may be embodied in a number of different ways. For example, the processor 102 may be embodied as various processing means such as a microprocessor or other processing element, a coprocessor, a controller or various other computing or processing devices including integrated circuits such as, for example, an ASIC (application specific integrated circuit), an FPGA (field programmable gate array), a hardware accelerator, or the like. In an example embodiment, the processor 102 may be configured to execute instructions stored in the memory 104 or otherwise accessible to the processor 102. As such, whether configured by hardware or software methods, or by a combination thereof, the processor 102 may represent an entity (e.g., physically embodied in circuitry) capable of performing operations according to embodiments of the present invention while configured accordingly. Thus, for example, when the processor 102 is embodied as an ASIC, FPGA or the like, the processor 102 may be specifically configured hardware for conducting the operations described herein. Alternatively, as another example, when the processor 102 is embodied as an executor of software instructions, the instructions may specifically configure the processor 102 to perform the operations described herein.

In an example embodiment, the processor 102 (or the processing circuitry 100) may be embodied as, include or otherwise control the payments platform 50, which may be any means such as a device or circuitry operating in accordance with software or otherwise embodied in hardware or a combination of hardware and software (e.g., processor 102 operating under software control, the processor 102 embodied as an ASIC or FPGA specifically configured to perform the operations described herein, or a combination thereof) thereby configuring the device or circuitry to perform the corresponding functions of the payments platform 50 as described below.

The payments platform 50 may be configured to include tools to facilitate the creation of customer/vendor accounts (and a corresponding customer/vendor profile), and the coordination of communication and fund transfers to support the operations of the payments platform 50 as described herein. The tools may be provided in the form of various modules that may be instantiated by configuration of the processing circuitry 100. FIG. 2 illustrates some examples of modules that may be included in the payments platform 50 and that may be individually configured to perform one or more of the individual tasks or functions generally attributable to the payments platform 50 according to an example embodiment. However, the payments platform 50 need not necessarily be modular. In cases where the payments platform 50 employs modules, the modules may, for example, be configured to perform the tasks and functions described herein. In some embodiments, the payments platform 50 and/or any modules comprising the payments platform 50 may be any means such as a device or circuitry operating in accordance with software or otherwise embodied in hardware or a combination of hardware and software (e.g., processor 102 operating under software control, the processor 102 embodied as an ASIC or FPGA specifically configured to perform the operations described herein, or a combination thereof) thereby configuring the device or circuitry to perform the corresponding functions of the payments platform 50 and/or any modules thereof, as described herein.

As shown in FIG. 2, the payments platform 50 may include the logic module 60, the trigger module 70 and the feature processing module 80 discussed above in reference to FIG. 1. In an example embodiment, the logic module 60 may be configured to make a limit determination (e.g., a transaction limit) by applying the information provided thereto to a set of business logic and/or a model. In an example embodiment, the model may be or include a time-survival model 130. Using the time-survival model 130 and any other computer logic or executable code that defines the logic module 60, the features provided by the feature processing module 80 may be used to determine the transaction limit that will be used in connection with determining whether an individual transaction is approved or authorized when the customer presents the value card 12 for payment.

In an example embodiment, the time-survival model 130 may be constructed to generate an output ACH return propensity (e.g., an NSF propensity (or NSF prediction)) that is indicative of the likelihood of receiving an NSF notification in connection with a transaction of a corresponding value. Thus, for example, the time-survival model 130 may list respective NSF propensity values, and map the NSF propensity values to model limits that are constrained using various business rules.

In some cases, the logic module 60 may correlate NSF propensity to transaction values and define a threshold value, which may become the corresponding limit determination. In other words, again by way of example, a given percentage X% may be defined as the threshold value for NSF propensity above which the risk of loss is too great to be acceptable. The corresponding transaction value $YY for the NSF propensity that lies at the threshold value of X% may then define the debit or transaction limit that is determined by the logic module 60. The logic module 60 may be configured to enter the time-survival model 130 or otherwise generate the limit determination based on the model's ability to correlate feature vectors to NSF propensity. The features provided by the feature processing module 80 may therefore be converted into or otherwise take the form of feature vectors.

In an example embodiment, the feature processing module 80 may receive massive amounts of data that may be relevant to NSF propensity from many different arbitrary data sources 140. The arbitrary data sources 140 may be different types of data, some of which may be directly financial in nature, and some of which may not. For example, social media content/activity, marketing content/activity, and various other sources of information may be included in the arbitrary data sources 140. In some embodiments, the arbitrary data sources 140 may be provided to the feature processing module 80 for conversion into feature vectors that are usable by the logic module 60 as described above. The feature processing module 80 may include a real time streaming platform 150, which provides streaming data from the arbitrary data sources 140 to the logic module 60 on a continuous basis. In some cases, the streaming data may include user exposure signals, user history signals, credit report signals, user payment signals, and inter-institution signals relating to the user (i.e., customer) or accounts of the user. Moreover, in some cases, the streaming platform 150 may further be configured to provide the feature vectors to the logic module 60, although in others, the feature processing module 80 may perform feature vector extraction on raw data provided by the streaming platform 150 via a machine learning module 160.

Thus, in some cases, the feature processing module 80 may also include or otherwise be operably coupled to the machine learning module 160. The machine learning module 160 may be configured to identify feature vectors based on pattern identification associations via multivariate optimization in some cases. The machine learning module 160 may include trained models that are also updateable during operation for further learning and modification. The trained models that are updateable may include the time-survival model 130 in some cases. Thus, in some cases, the machine learning module 160 may be configured to employ machine learning techniques to improve the performance of the logic module 60 over time.

The machine learning module 160 may also or alternatively include one or more models configured for feature learning. Via the models configured for feature learning, the machine learning module 160 may be configured to efficiently extract feature vectors from massive amounts of potentially relevant real time data that is streamed to the machine learning module 160 via the streaming platform 150. In such examples, the feature learning may be performed via either supervised or unsupervised learning that is accomplished via machine learning modules, such as gradient boosted decision trees/gradient boosted machines. In some cases, the machine learning module 160 may also perform or assist with transaction or loan modeling and decision making as described herein. The machine learning module 160 may utilize the models and current information provided thereto (e.g., from the streaming platform 150) in order to make a transaction limit determination as described above.

By employing the machine learning module 160, the massive amounts of real time data that can be provided to the logic module 60 asynchronously for limit determination can be made sense of in meaningful ways, and in extremely fast timeframes. This may draw the latency associated with determining transaction limits down substantially, which may in turn boost card swipe activations and decrease the time to first use of the value card 12. In some embodiments, the latency of the payments platform 50 must not exceed 2.5 seconds, and the overall time to returning a limit determination even for a first time use or card swipe activation should never exceed one minute. The machine learning module 160 may therefore easily respond to over one hundred thousand requests per day (e.g., about two limit updates per user).

As noted above, the employment of the machine learning module 160 in connection with powering the feature processing module 80 increases the sensitivity of the logic module 60 to the availability of massive amounts of potentially relevant information. However, unless the limit determining frequency is constrained, rapid and potentially wild swings in limit determinations may occur, which may cause other problems. To avoid high frequency limit determinations, the trigger module 70 may be combined into the payments platform 50 to counterbalance the sensitivity increase, but still enable many such determinations to be made on a scalable platform capable of servicing a massive number of users quickly. In some cases, the counterbalance applied may only be provided where increases/decreases in transaction limits are relatively small such that the value in an increase/decrease causes more consumer value loss than risk mitigation and thereby constitutes an overall reduction in business value.

The trigger module 70 may therefore (e.g., via the network 30 and/or the device interface 120) receive event data 170 that monitored by the trigger module 70 to detect an event trigger 180. The event trigger 180 may be an event that is associated with either card activity (i.e., of the value card 12) or account activity (associated with the value card 12), which is deemed to be worthy of initiating a recalculation of the debit or transaction limit of the customer via the logic module 60. In some cases, the event trigger 180 may include a user onboarding event (e.g., when a customer obtains and activates the value card 12), linking a new account to the value card 12, completing an ACH transaction, or experiencing an ACH return (e.g., an insufficient funds event). The insufficient funds event (e.g., an example of an ACH return event) may be an NSF exit caused due to any issue arising in connection with an ACH requests/notifications 190. Accordingly, as the event data 170 (which may include the ACH requests/notifications 190) comes into the trigger module 70 (e.g., via the network 30 and/or device interface 120), the trigger module 70 may look for any of the events listed above to determine if such event qualifies as the event trigger. Thus, the mere occurrence of the above-listed examples of the event trigger 180 does not necessarily constitute the event trigger 180. Instead, when one of the examples occurs, the trigger module 70 may examine the corresponding event to determine whether it qualifies as the event trigger 180 to cause the logic module 60 to make the limit determination. In addition to performing the limit determination, the ACH attempt may be withheld, if there is a high likelihood of an ACH return.

Accordingly, the generation of a transaction limit is only accomplished in response to a qualifying instance of the event trigger 180. After the limit determination is made, a corresponding determined debit limit 195 may be stored (e.g., at the logic module 60 or any other portion of the payments platform 50). Thus, for example, when the value card 12 is a debit card, and a debit transaction is attempted using the value card 12, there is no recalculation of the debit limit made responsive to the swipe of the value card 12. The immediate decision to accept or reject the debit transaction is therefore also not made on the basis of a debit limit determination made synchronously with the swipe. Instead, asynchronous streaming data relevant to the limit determination is processed when the event trigger 180 is received, and the corresponding debit limit 195 is saved for consideration with respect to the next swipe of the value card 12. The decision to accept or reject the debit transaction is therefore capable of being made with very little noticeable latency as well, on the basis of asynchronously updated and refreshed limit determination activity that relates to card and account activity apart from the immediately present swipe attempt.

In an example embodiment, the debit limit 195 is saved along with an age indicator, which accounts for the time since the last limit determination (and therefore how old the debit limit 195 is). In some cases, the debit limit may further be modified by an error factor that may be determined based on the age indicator. In this regard, for example, the debit limit 195 may be reduced by some amount as the time since the last limit determination increases. This decay in the debit limit 195 is meant to account for any uncertainty that may exist due to a lack of recent activity of the value card 12 or the accounts associated therewith.

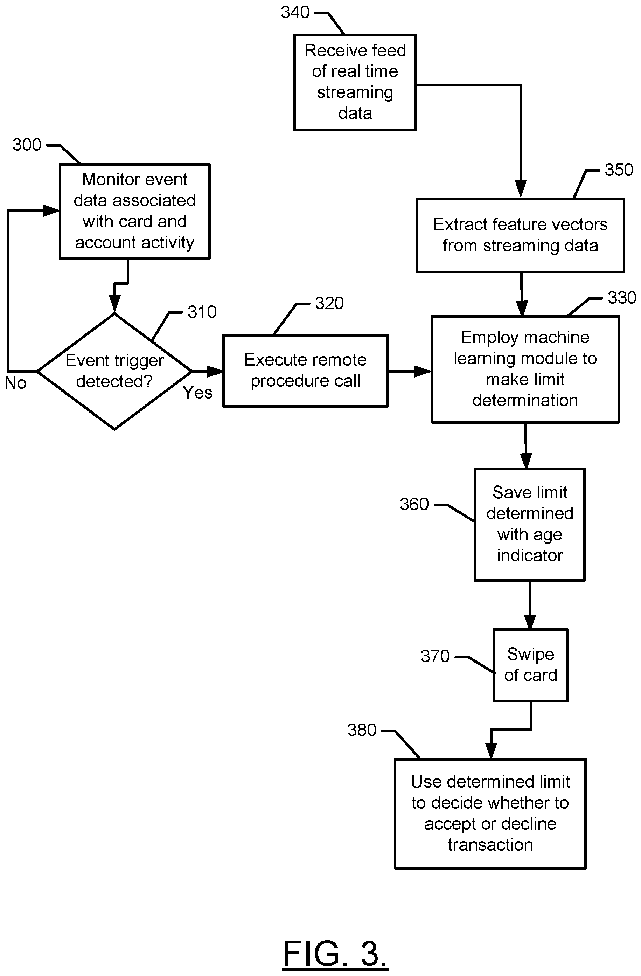

FIG. 3 illustrates a block diagram of a process flow for a value card transaction in accordance with an example embodiment. As shown in FIG. 3, process flow may begin with continuous monitoring of event data associated with card activity and account activity at operation 300. The monitoring may be performed to detect an event trigger, and may continue as long as no such event trigger is detected. If, however, the determination regarding whether an event trigger is detected at operation 310 is positive, then the payments platform 50 may execute a remote procedure call (RPC) at operation 320. The RPC may trigger employment of a machine learning module to make a limit determination at operation 330. However, the limit determination may require receipt of a feed of real time streaming data at operation 340 and the extraction of feature vectors from that streaming data at operation 350. As noted above, the streaming data may be available at all times, but the limit determination itself (of operation 330) may only be performed when the event trigger is detected at operation 310. This saves computing resources, but keeps the system primed and ready to make rapid determinations when called upon.

The limit determined is then saved at operation 360 along with an age indicator. At some undetermined future time, a swipe of the value card may be received at operation 370. The determined limit may then be used at operation 380 (perhaps as modified based on the age indicator) to decide whether to accept or decline the transaction.

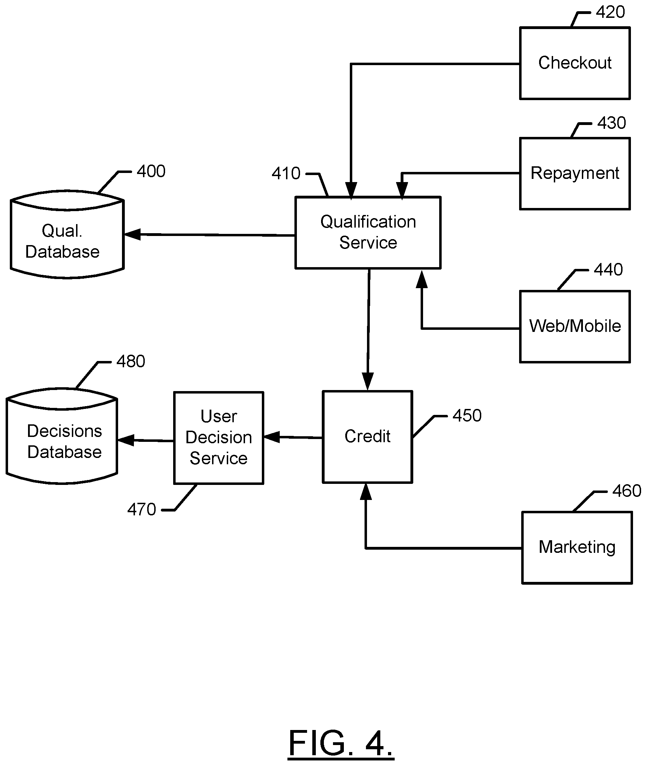

The method of FIG. 3 and the hardware described in reference to FIG. 2 are merely examples of methods and hardware that could be employed to implement example embodiments. Moreover, in some cases, various services or systems may cooperate to practice example embodiments, and different combinations of hardware and software may be employed to implement such services and systems. FIG. 4 is a block diagram of various systems interactions that may be employed to implement an early capture capability in accordance with an example embodiment.

As shown in FIG. 4, a qualification database 400 may store information associated with qualification of a plurality of users, each having a corresponding user account setup and maintained as described above. In an example embodiment, the qualification database 400 may be a portion of the database server 44 of FIG. 1, or implemented in memory 104 of FIG. 2. A qualification service 410 may interface with and update the qualification database 400. The qualification service 410 may be implemented from the payments platform 50, and may employ the functionalities described in connection with the descriptions of FIG. 2.

Checkout information may be provided to the qualification service 410 by various checkout systems 420 associated with respective different vendors or websites. The checkout information may be indicative of card swipe or other attempts to use the card for payment. Repayment information may also be provided to the qualification service 410 by various repayment systems 430 associated with respective different vendors or websites. Web or mobile devices 440 may be examples of clients 20 that may interact with the qualification service 410 to setup user accounts and to initiate transactions (via the checkout systems 420) or make payments (via the repayment systems 430).

Transaction system 450 may be employed to make transaction extension decisions based on information from the qualification service 410, and to augment (or boost) transaction limits based on marketing information from a marketing system 460, which may indicate when particular boosts, enhancements, or incentives for various merchants are applicable. A user decision service 470 may be used to inform the user of transaction decisions. All information resulting from these decisions may be recorded in decisions database 480.

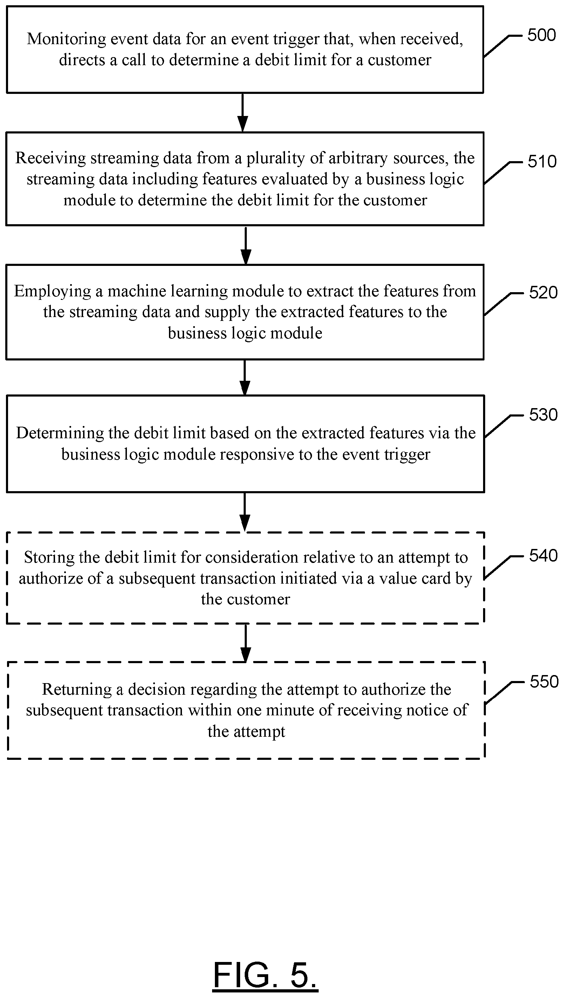

From a technical perspective, the payments platform 50 described above may be used to support some or all of the operations described above. As such, the apparatus described in FIG. 2 may be used to facilitate the implementation of several computer program and/or network communication based interactions. As an example, FIG. 5 is a flowchart of a method and program product according to an example embodiment of the invention. It will be understood that each block of the flowchart, and combinations of blocks in the flowchart, may be implemented by various means, such as hardware, firmware, processor, circuitry and/or other device associated with execution of software including one or more computer program instructions. For example, one or more of the procedures described above may be embodied by computer program instructions. In this regard, the computer program instructions which embody the procedures described above may be stored by a memory device of a user terminal (e.g., client 20, application server 42, and/or the like) and executed by a processor in the user terminal. As will be appreciated, any such computer program instructions may be loaded onto a computer or other programmable apparatus (e.g., hardware) to produce a machine, such that the instructions which execute on the computer or other programmable apparatus create means for implementing the functions specified in the flowchart block(s). These computer program instructions may also be stored in a computer-readable memory that may direct a computer or other programmable apparatus to function in a particular manner, such that the instructions stored in the computer-readable memory produce an article of manufacture which implements the functions specified in the flowchart block(s). The computer program instructions may also be loaded onto a computer or other programmable apparatus to cause a series of operations to be performed on the computer or other programmable apparatus to produce a computer-implemented process such that the instructions which execute on the computer or other programmable apparatus implement the functions specified in the flowchart block(s).

Accordingly, blocks of the flowchart support combinations of means for performing the specified functions and combinations of operations for performing the specified functions. It will also be understood that one or more blocks of the flowchart, and combinations of blocks in the flowchart, can be implemented by special purpose hardware-based computer systems which perform the specified functions, or combinations of special purpose hardware and computer instructions.

In this regard, a method for expediting speed and enhancing accuracy of debit limit determinations based on streaming data feeds according to an example embodiment is shown in FIG. 5. The method may include monitoring event data for an event trigger that, when received, directs a call to determine a debit limit for a customer at operation 500. The method may further include receiving streaming data from a plurality of arbitrary sources, the streaming data including features evaluated by a business logic module to determine the debit limit for the customer at operation 510, and employing a machine learning module to extract the features from the streaming data and supply the extracted features to the business logic module at operation 520. The method may also include determining the debit limit based on the extracted features via the business logic module responsive to the event trigger at operation 530.

In some embodiments, the method (and a corresponding apparatus or system configured to perform the operations of the method) may include (or be configured to perform) additional components/modules, optional operations, and/or the components/operations described above may be modified or augmented. Some examples of modifications, optional operations and augmentations are described below, and optional operations are shown in dashed lines. It should be appreciated that the modifications, optional operations and augmentations may each be added alone, or they may be added cumulatively in any desirable combination. In this regard, for example, the method may further include storing the debit limit for consideration relative to an attempt to authorize of a subsequent transaction initiated via a value card by the customer at operation 540. In some embodiments, the method may further include returning a decision regarding the attempt to authorize the subsequent transaction within one minute of receiving notice of the attempt at operation 550. In an example embodiment, the debit limit is further stored with an age indicator. In some cases, the debit limit may be modified by an error factor determined based on the age indicator. In an example embodiment, determining the debit limit may include determining a propensity for receiving an insufficient funds notification (i.e., a propensity or probability for receiving an ACH return, ACH failure, NSF return, etc.) for a transaction request initiated by the customer over a range of transaction values and defining the debit limit at a transaction value corresponding to a threshold propensity. Within this context, the insufficient funds notification is any indication that a transaction is not supportable, which may include an ACH return or NSF return. In some cases, the machine learning module may identify the features based on pattern identification associations with multivariate optimization. In an example embodiment, the propensity for receiving the insufficient funds notification may be determined based on a time-survival model. In some cases, the event trigger may include a user onboarding event, linking a new account, completing an ACH transaction, or experiencing an insufficient funds event. In an example embodiment, the streaming data may include user exposure signals, user history signals, credit report signals, user payment signals, and inter-institution signals.

In an example embodiment, an apparatus for performing the method of FIG. 5 above may comprise a processor (e.g., the processor 102) or processing circuitry configured to perform some or each of the operations (500-550) described above. The processor may, for example, be configured to perform the operations (500-550) by performing hardware implemented logical functions, executing stored instructions, or executing algorithms for performing each of the operations. In some embodiments, the processor or processing circuitry may be further configured for additional operations or optional modifications to operations 500 to 550.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe exemplary embodiments in the context of certain exemplary combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. In cases where advantages, benefits or solutions to problems are described herein, it should be appreciated that such advantages, benefits and/or solutions may be applicable to some example embodiments, but not necessarily all example embodiments. Thus, any advantages, benefits or solutions described herein should not be thought of as being critical, required or essential to all embodiments or to that which is claimed herein. Although specific terms are employed herein, they are used in a generic and descriptive sense only and not for purposes of limitation.

## Claims

1. A method for expediting speed and enhancing accuracy of debit limit determinations based on streaming data feeds, the method comprising:
monitoring event data for an event trigger that, when received, directs a call to determine a debit limit for a customer;
receiving streaming data from a plurality of arbitrary sources, the streaming data including features evaluated by a business logic module to determine the debit limit for the customer;
employing a machine learning module to extract the features from the streaming data and supply the extracted features to the business logic module; and
determining the debit limit based on the extracted features via the business logic module responsive to the event trigger.

2. The method of claim 1, further comprising storing the debit limit for consideration relative to an attempt to authorize of a subsequent transaction initiated via a value card by the customer.

3. The method of claim 2, further comprising returning a decision regarding the attempt to authorize the subsequent transaction within one minute of receiving notice of the attempt.

4. The method of claim 2, wherein the debit limit is further stored with an age indicator.

5. The method of claim 4, wherein the debit limit is modified by an error factor determined based on the age indicator.

6. The method of claim 1, wherein determining the debit limit comprises determining a propensity for receiving an insufficient funds notification for a transaction request initiated by the customer over a range of transaction values and defining the debit limit at a transaction value corresponding to a threshold propensity.

7. The method of claim 6, wherein the machine learning module identifies the features based on pattern identification associations with multivariate optimization.

8. The method of claim 6, wherein the propensity for receiving the insufficient funds notification is determined based on a time-survival model.

9. The method of claim 1, wherein the event trigger comprises a user onboarding event, linking a new account, completing an automated clearing house (ACH) transaction, or experiencing an insufficient funds event.

10. The method of claim 1, wherein the streaming data comprises user exposure signals, user history signals, credit report signals, user payment signals, and inter-institution signals.

11. An apparatus for expediting speed and enhancing accuracy of debit limit determinations based on streaming data feeds, the apparatus comprising processing circuitry configured to perform the method of any of claims 1-10.
